Europäisches Patentamt

European Patent Office

Office européen des brevets

(19)

(11) **EP 1 524 451 A1**

(12) **EUROPEAN PATENT APPLICATION**

(43) Date of publication:
**20.04.2005 Bulletin 2005/16**

(51) Int Cl.⁷: **F16G 5/16**

(21) Application number: **03078220.5**

(22) Date of filing: **13.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **ROBERT BOSCH GMBH**
**70442 Stuttgart (DE)**

(72) Inventors:
• **Van der Meer, Cornelis Johannes Maria**
**5032 XG Tilburg (NL)**

• **Prinsen, Lucas Hendricus Robertus Maria**
**5175 AC Loon op Zand (NL)**
• **Mutsaers, Robert Arnoldus Andreas**
**5062 LV Oisterwijk (NL)**

(74) Representative: **Müller, Georg**
**Robert Bosch GmbH**
**Postfach 30 02 20**
**70442 Stuttgart (DE)**

(54) **Push belt**

(57) The invention relates to a push belt (3) for a continuously variable transmission where the belt (3) is partly clamed between sheaves (4, 5) of a pulley (1, 2) of the transmission that comprises an endless tensile means (31) and a multitude of platelike transverse elements (33) that are provided on the tensile means (31) oriented predominantly transversely thereto and movable along its longitudinal direction, which elements (33) each show locking means (39, 40; 50, 51) for limiting a relative movement in either transverse or axial direction between two adjacent elements (33), i.e. an axial play $D_X$, which is at most equal to the square of the element's dimension in the longitudinal direction Tact divided by the element's dimension in the axial direction Wact.

**FIG. 3**

EP 1 524 451 A1

**EP 1 524 451 A1**

**Description**

The present invention relates to a push belt for a continuously variable transmission, in particular for a motor vehicle, as defined in the preamble of claim 1.

Such a belt is generally known in the art, in particular from the Dutch patent application NL-1022022, which document is regarded included here by reference and which has not yet been published at the time of filing of the present application, and from the European patent applications EP-A-0329206 and EP-A-0626526, all in the name of Applicant. The said Dutch patent application discloses the desire to realise a belt design comprising transverse elements in which a projection and a hole that are conventionally provided may be obviated.

Such commonly provided, mutually matching projection and hole is e.g. known via European patent publication EP-A-0329206, in which document the projections are shaped conical. However, a cylindrically shaped projection is applied most commonly. The projection and hole are thereby designed to allow only a limited amount of play between adjacent elements in any direction transversely oriented with respect to the longitudinal direction of the belt. The projection and hole serve to prevent the element from tumbling one over the other at entry in a pulley, here denoted as element pitching, whereby the elements rotate around the axial direction and thereby slide over one another in a predominantly radial direction. In the conventional element design, such mutual sliding of adjacent elements is limited by the projection of a succeeding element being confined by the hole of a preceding element.

The said desire to omit at least part of a projection as expressed in NL-1022022 has arisen from the complications experienced at manufacture of these transverse elements. At entirely obviating such projection and hole, however, alternative means should be provided to limit the above-mentioned mutual sliding in radial direction. In the belt according to the said prior art document it is suggested to design an upper part of the element with arm parts extending up into an imaginary plane of contact with the sheaves of a pulley in which the belt is intended to run. In practice it appeared, however, that whilst the problem of element pitching was favourably tackled, the operation of such belt was not optimal in that in certain circumstances slip of the belt relative to a pulley occurred unexpectedly.

Closer analysis revealed that the elements of this type of belt were sometimes taken up by the pulley in a skewed orientation, i.e. rotated around the radial direction whereby the elements have slid over one another in a predominantly axial direction, which movement is defined here as element yawing. Thus, when looking at a trajectory part of the belt between the sheaves of a pulley that is bent in the longitudinal direction thereof, the elements are then oriented at an angle with the axial direction as defined with respect to the pulley. It appeared that in such skewed orientation a clamping force exerted by the pulley sheaves on either side of the elements located in the said bent trajectory part was partly wasted and, consequently, that a torque transmittable between the pulleys of the transmission by means of friction was considerably less than what was expected.

Where in the prior art many measures are known to provide for proper entry of the elements into a pulley, for example by prohibiting mutual pitching, limiting mutual rotation or by promoting axial pre-positioning of elements before entry, it is now an object of the invention, to provide for and quantify a measure promoting the axial orientation at entry into a pulley and maintain such orientation between the sheaves thereof, whereby the said element yawing is avoided to a large extend and torque may transmitted between the pulleys efficiently, and, wherever possible, to simultaneously provide for a less complicated, easy to manufacture element design.

According to the invention these objects may be realised by applying the characterising feature of claim 1. With such feature, a belt element entering a pulley is not only prevented from pitching, either by the presence of upper element parts for contacting the pulley, i.e. the said arm parts, or by the presence of a projection that engages a hole of a preceding element in radial direction, but is also prevented from yawing, at least to an extend that could compromise an efficient torque transmission.

In accordance with the invention, the amount of axial play between (the projection and hole) of adjacent elements should be defined in relation to the (axial) width and the (longitudinal) thickness of the elements as incorporated in the belt relative to the pulley sheaves. Hereby, the axial play is defined by the maximum possible amount of linear axial displacement of one of two adjacent elements to only one side, i.e. starting from the respective projection being located centrally in the respective hole and moving the said projection laterally towards one side (i.e. either to the left or to the right) until it engages a wall of the said hole. For a symmetrically designed projection and hole, the axial play defined in accordance with the present invention thus amounts to half a total amount of transverse movement possible between the adjacent elements.

With the measure according to the invention the said element yawing is limited such that it is prevented that the element assumes an unfavourable skewed orientation, i.e. the measure effects that under all circumstances the clamping force exerts a moment on the element that counteracts the element yawing, preferably forcing the element back into a predominantly axially (width-wise) aligned orientation.

Theoretically, the amount of axial play provided is as large is possible, ideally being equal to the upper boundary therefor as defined per claim 1, however, in accordance with a first refinement of the invention, it is noted that it is in practice preferable to provide for a safety margin between the theoretically maximum allowable axial play and the practically applied axial play. According to the invention a factor between 90 to 95% may provide a suitable margin in this respect.

It is further noted that the elements may undergo not only the said element pitching in dependence on the amount of a radial play between the projection and hole, but may a/o also rotate slightly around the longitudinal direction of the belt. Each such element movement may result in a less than perfect alignment of the element with respect the pulley sheaves. This phenomenon could be taken into account by determining the worst case orientation of the element that might occur during operation of the transmission in relation to the element yawing motion. However, according to the invention, applying a factor of 80% or less to the maximum allowable axial play determined in relation to the element width and thickness may also provide suitable results in this respect.

According to the invention, the axial play between two adjacent elements should also satisfy a minimum value so as to allow a minimum amount of positional freedom there between and to provide some flexibility to the belt in axial direction. Such minimum value should at least allow a part of the belt trajectory that crosses between the pulleys to be oriented at a slight angle with respect to the radial direction to compensate for non-perfect pulley alignment, which aspect of the transmission is described in EP-A-0976949. Typically, a minimum amount of axial play of 0.01 mm would be required or about 0.005 of the element thickness.

Although, as is explained above and in the following, the measure according to the invention is relevant for virtually all known types of belt elements, it may in particular be applied favourably in the above-mentioned design having an upper element part with arm parts for contacting the pulley sheaves. Preferably, the projection and hole are then located at or near a rocking edge of the element that forms the transition from the upper element part to a tapered lower element part. Because in this element design the projection and hole need only engage in the axial direction -element pitching being prevented by the provision of the arm parts- and may therefore be favourable shaped oblong, possibly extending over the full radial (height) of the element.

The invention will now by way of example be elucidated further along a drawing in which:

figure 1 is a schematic representation of a continuously variable transmission in which a belt according to the invention is normally included;
figure 2 schematically indicates the feature addressed by the present invention at which transverse elements of the belt are located between the sheaves of a pulley in a skewed orientation ("element yawing")
figure 3 represents a side and a front elevation of a transverse element in designed in accordance with the invention;
figure 4 represents an alternative embodiment of the transverse element, also in accordance with the invention.

In the figures, identical reference numbers relate to identical or at least comparable technical features.

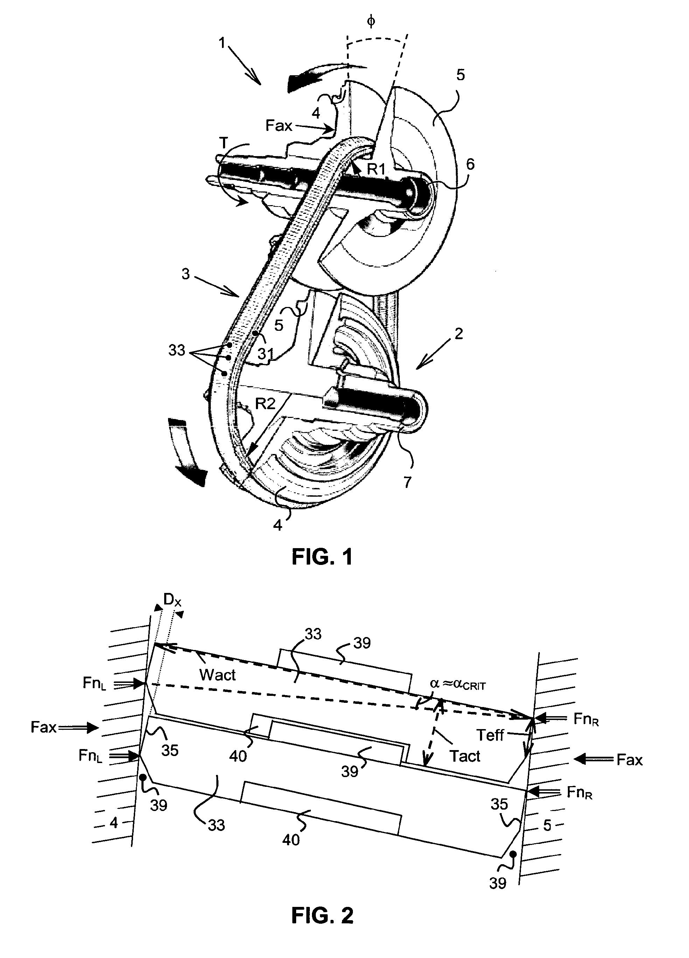

Figure 1 shows the central parts of a known continuous variable transmission, as is commonly applied in the drive line of personal vehicles between the engine and the drive wheels thereof. The transmission comprises two pulleys 1, 2, each provided with two pulley sheaves 4, 5, between which a metal push belt 3 is present for transmitting a rotational movement and an accompanying torque from the one pulley 4,5 to the other 4, 5. The pulley sheaves 4, 5 are generally shaped conical and at least one pulley sheave 4 is incorporated in the transmission axially moveable along a respective pulley shaft 6, 7 over which it is placed. The transmission generally also comprises activation means that impose on the said at least one sheave 4 an axially oriented clamping force Fax directed towards the respective other pulley sheave 5 such that the belt 3 is clamped there between.

The belt 3 comprises an endless tensile means 31 and a multitude of plate-like transverse elements 33 that are provided on the tensile means 31 oriented predominantly transversely thereto and movable along its longitudinal direction. The elements 33 take-up the clamping force Fax, such that at rotation of a driving pulley 1, friction between the sheaves 4, 5 and the belt 3, causes the elements 33 to be thrust from the driving pulley 1 to the driven pulley 2, around the drive pulley 2 and back to the driving pulley 1, thereby being guided and supported by the tensile means 31. A transmission ratio of the transmission is thereby determined and defined by the quotient of the effective radius of contact R1 of the belt 3 at the driving pulley 1 and the effective radius of contact R2 of the belt 3 at the driven pulley 2. Such transmission ratio may vary continuously in a range of transmission ratios, typically between a largest value of around 2.3, which is commonly denoted the Low transmission state, and a smallest value of around 0.45, which is commonly denoted the Overdrive transmission state.

Figure 2 represents a simplified top view of a cross-section of a trajectory part of the belt 3 between the sheaves 4, 5 of a pulley 1, 2 that is bent in the longitudinal direction as seen in radial inward direction. Representing a discovery during investigation of alternative transverse element designs, which underlies the present invention, the figure shows two elements 33 tilted about a radial axis such that they are oriented at an yaw angle $\alpha$ with respect to a theoretical perfect axial alignment thereof perpendicular to the pulley sheaves 4 and 5. The endless tensile means 31 have been omitted from the figure. The elements 33 of the belt 3 are each provided with a protruding part or projection 39 that engages a recessed part or hole 40 of a respectively adjacent element 33.

The skewed orientation of the elements 33 that has been observed in practice, alternatively referred to with the terms element yawing, is probably initiated because during operation a part of the belt trajectory that crosses between the pulleys may be oriented at a slight angle with respect to the radial direction. However, also other factors like difference in friction between the elements 33 and respective sheave 4, 5 may contribute to or be the primary cause of such element yawing. As indicated in figure 2, to assume the skewed orientation the adjacent elements 33 are required to mutually slide in a predominantly axial direction over a distance D, which may be approximated by the equation:

$$D = Tact \cdot \tan(\alpha) \tag{1}$$

Herein denotes Tact the actual thickness of the element 33, i.e. its nominal dimension in the longitudinal direction of the belt 3, as measured when the transverse element 33 is axially aligned.

Since the respective projection 39 and hole 40 mutually move over the same distance D, an axial play $D_X$ between the projection 39 and hole 40 the adjacent elements 33 determines a maximum value for the yaw angle $\alpha_{MAX}$ in one direction of rotation about the radial direction. Thus

$$\alpha_{MAX} = \arctan\left(\frac{D_X}{Tact}\right) \tag{2}$$

Because the elements 33 can in principle rotate both clockwise and anticlockwise starting from a mutually axially aligned position, the total amount of transverse play between the elements 33 amounts to twice the said axial play $D_X$.

The clamping force Fax exerted by the pulley sheaves on the belt 3 is also indicated in figure 2. This force Fax is distributed over the elements 33 that are located in the bent trajectory part of the belt 3 between the pulley sheaves 4, 5 and results in a force component Fn on each of the pulley contact faces 35 of the said elements 33. It is clear from the figure that the force components Fn working on either side of the element 33 can effect a force moment thereon, depending on the yaw angle $\alpha$.

Now, in accordance with the insight underlying the invention, the said element yawing is limited such that it is prevented that the element 33 assumes an unfavourable skewed orientation. According to the invention, such unfavourable orientation that is to be avoided corresponds to the situation where the forces $Fn_L$ and $Fn_R$ effected on the lateral side faces 35 of a respective element 33 effect a moment that would promote the element yawing. Referring to figure 2, wherein the elements 33 are depicted in a clockwise rotated skewed orientation, this situation would occur when the yaw angle $\alpha$ exceeds a critical value $\alpha_{CRIT}$, whereby a force component $Fn_L$ exerted on the left pulley contact face 35 of the element 33 is effected in front of a force component $Fn_R$ exerted on the right pulley contact face 35 of the element 33 and a clockwise oriented moment would be effected on the element 33. Instead, according to the present invention, the yaw angle $\alpha$ should thus be such that at all times during operation of the belt 3 the said moment of the respective force components $Fn_L$, $Fn_R$ urges back into a predominantly axially (width-wise) aligned orientation, which in this example would correspond to an anticlockwise moment to be effected by the said forces on the element 33. As explained in the above, the said axial play $D_X$ may be used to limit the yaw angle $\alpha$, such that the following equation may be derived in accordance with the present invention:

$$Dx \leq Tact \cdot \tan(\alpha_{CRIT}) \tag{3}$$

The critical value for the yaw angle $\alpha_{CRIT}$ occurs when the respective force components $Fn_L$, $Fn_R$ urge the element 33 back into a predominantly axially (width-wise) aligned orientation, which for a transverse element 33 having a predominantly square cross-section may be approximated by the following equation:

$$\alpha_{CRIT} = \arctan(\frac{Teff}{Wact}) \tag{4}$$

Herein denotes Wact the actual width of the element 33, i.e. its nominal dimension in the axial direction of the belt 3, as measured when the transverse element 33 is axially aligned and wherein Teff is an effective longitudinal dimension of the pulley contact faces 35 of element 33, i.e. a distance over which a pulley contact face 35 may arrive into contact with a pulley sheave 4, 5 when the transverse element 33 is axially aligned. Such effective thickness Teff may be equal to or less then the element's actual thickness Tact, which latter situation may for example arise as the result of the provision of a radially extending recess 49 at an edge of the pulley contact faces 35 forming a channel between adjacent elements 33 for accommodating lubrication fluid, or as an artefact of the manufacturing process of the elements, e.g. fine blanking.

By combining equations (3) and (4) the measure according to the invention may be quantified by the following equation:

$$D_X \leq \frac{Tact \cdot Teff}{Wact} \qquad (5)$$

For transverse elements 33 of typical dimensions (approx. 1.5-2.0 mm width; approx. 24-30 mm width) this thus leads to a typical value for the maximum amount of axial play $D_X$ of about 0.11 mm.

In practice, it is often desirable that the actually applied axial play $D_X$ is smaller than approximately 80% of the maximum value thereof that is calculated with the aid of equation (4). Hereby, the inaccuracies (e.g. rectangular element cross-section), approximations (e.g. non-deformable elements 33 and sheaves 4, 5) and other modes of element movement (e.g. pitching) are favourably taken into account.

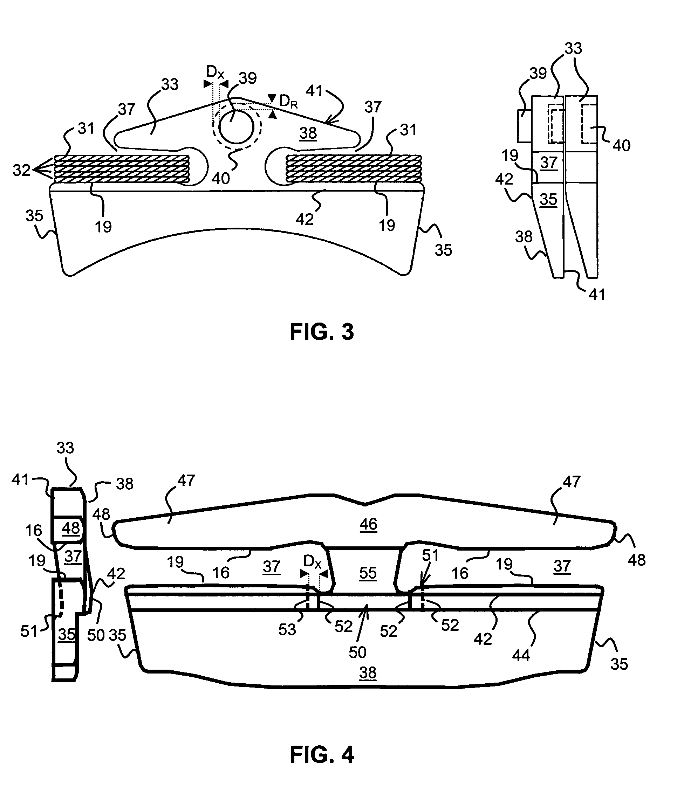

Figure 3 illustrates the measure according to the invention implemented in a transverse element design as commonly applied in the art, which design is described in more detail in, for example, the European patent publication EP-A-0626526 that is regarded included here by reference. The figure 3 depicts the element 33 as seen in the longitudinal direction of the belt 3 as well as in a simplified side elevation thereof. It is shown therein that the tensile means 31 is composed of two sets of radial nested thin metal rings 32, each set inserted into a predominantly transversely extending ring receiving recess 37 of the element 33 and supported by a bearing surface 19 of such recess 37.

The transverse elements 33 are provided with lateral side or pulley contact faces 35 that during operation are clamped between and arrive into frictional contact with the sheaves 4, 5 of the driving pulley 1 and of the driven pulley 2 respectively. For allowing a mutual rocking of the elements 33 about a generally axially oriented line of contact between two adjacent elements 33 in the said bent trajectory part of the belt 3, they are provided with a so-called rocking edge 42 on their respective front principle faces 38 defining an axially oriented, sharp or slightly rounded edge between two sections of the front principle face 38 that are mutually oriented at a small but notional angle. From the rocking edge 42 downwards, the element 33 is tapered, i.e. this radially inward located side of the element is provided with a dimension in the longitudinal direction of the belt 3 that is less than the essentially constant nominal thickness Tact of the element 33 above the rocking edge 42. The elements 33 are further provided with a projection 39 protruding from a front principle face 38 thereof, for interaction with a hole 40 provided in a back principle face 41 thereof as indicated by the dashed lines, so as to mutually align and/or position two adjacent transverse elements 33. Reference "$D_X$" illustrates the axial play $D_X$ between the element as defined in accordance with the present invention.

Hereby it is remarked that the known element design is provided with a defined amount of element play $D_R$ in the radial direction for various reasons, including the limitation of the above-mentioned element 33 rotation about the axial direction, alternatively denoted element pitching. Because often a cylindrical projection 39 and hole 40 are used and by the measure of the defined radial play $D_R$ more or less automatically also the same amount of axial play $D_X$ is included. However, such play $D_R$ defined in relation to element pitching is found to be larger than what is prescribed by the present invention. Moreover, according to several prior art documents that specifically relate to the feature of the axial play $D_X$ between adjacent elements 33, such as for example the European patent applications EP-A-0588416 and EP-A-0976949 appear to teach that a defined axial play $D_X$ is not required at all.

Still, the present invention is of particular relevance in relation to a novel transverse element design illustrated by figure 4, which design is described in more detail in the Dutch patent application NL-1022022. The transverse element is depicted as seen in the longitudinal direction of the belt 3 as well as in a simplified side elevation thereof. In this design an upper boundary 16 of the ring receiving recess 37, which forms a radial inward facing surface of an upper part 46 of the element 33, is axially extended compared to the conventional element design to form arm parts 47 that are designed and intended to contact the pulley sheaves 4, 5 through their respective predominantly axially oriented end face 48 in addition to the said pulley contact surfaces 35 positioned radially inward form the ring receiving recess 37. By the provision of these arm parts 47 element pitching was favourably prevented as intended, however, it was found in practice that element yawing occurred to a considerable extent.

Therefore, it is presently considered advantageous to provide for locking means 50, 51 for limiting relative axial movement of adjacent elements 33 also in combination with this novel element design. However, for this special element design these means 50, 51 need not limit relative radial movement between the elements 33 such that they may be shaped differently from the conventional projection 39 and hole 40, in particular such that they may be provided on the respective principle face 38, 41 of the element 33 in a favourably simple manner.

In the element embodiment illustrated in figure 4, the locking means 50, 51 are favourably provided with protruding part 50 having predominantly straight edges and located centrally on the front principle face 38 of the element at a radial level corresponding to that of the rocking edge 42 and extending in radial outward (upward) direction to beyond the radial level of the bearing surface 19 for supporting the tensile means 31. On the back principle face there is provided a recessed part 51 of corresponding shape, however, such that at least in both transverse directions, i.e. both to the left and to the right from a central position, a defined axial play $D_X$ is realised between the side planes 52, 53 of such protruding part 50 and of the recessed part 51 respectively. These side planes 52, 53 are spatially substantially oriented in the radial and longitudinal direction with the axial play $D_X$ defined there between in transverse direction. In this manner relative movement of adjacent elements 33 is limited in axial direction only. It was found that such locking means 50, 51 having straight edges can be manufactured relatively easy, in particular when blanking the element 33 from plate material.

Since the locking means 50, 51 are only required to limit relative axial movement, they may extend in radial direction of the entire dimension, alternatively denoted height, of the element 33 in the form of a ridge and a groove centrally located on the principle faces 38, 41. However, in the illustrated embodiment the protruding part 50, is provided with a backwards sloping front surface part 55, preferably starting substantially at the radial level of the bearing surface 19 and extending radially outwards, such that the protruding part 50 in the radial outward direction gradually becomes less protruding and finally merges with the front principle face 38 of the element 33, preferably substantially at the radial level of the upper boundary 16 of the ring receiving recess 37. In radially inward direction the protruding part 50 ends in a step 44 of the element 33, which step 44 is know per se and which extends in axial direction over the entire element width, thereby defining a transition in the element thickness.

Because the locking means 50, 51 are thus provided at least partly at the radial level of the rocking edge 42, an amount of protrusion of the protruding part 50 may be kept to a minimum, which feature is highly advantageous in combination with the preferred blanking process for manufacturing transverse elements 33. Generally speaking, in comparison with the above-mentioned predominantly cylindrical projection 39 and hole 40 the locking means 50, 51 in accordance with the present invention allows for a favourably more easy to perform element manufacturing process.

**Claims**

1. Push belt (3), in particular for application in a continuously variable transmission wherein the belt (3) is partly clamed between sheaves (4, 5) of a pulley (1, 2) of the transmission, comprising an endless tensile means (31) and a multitude of plate-like transverse elements (33) that are provided on the tensile means (31) oriented predominantly transversely thereto and movable along its longitudinal direction, which elements (33) each show at least one recess (37) for accommodating the endless tensile means (31), a pulley contact face (35) located radially inward from the recess (37) on either lateral side of the element (33) and locking means (39, 40; 50, 51) for limiting a relative movement in either transverse or axial direction between two adjacent elements (33), i.e. an axial play $D_X$, thereby limiting a rotation of the elements (33) about the radial direction of the belt (3) at least when clamped between the sheaves (4, 5) of a pulley (1, 2), **characterised in that** the said rotation of the elements (33) is limited to the extent that a force moment effected on the elements (33) by two axially oriented force components ($Fn_R$, $Fn_L$), which are each exerted by a respective pulley sheave (4, 5) on a respective pulley contact face (35) of the elements (33), does not support such rotation and preferably counteracts such rotation by urging the element to rotate in opposite direction.

2. Push belt, in particular for application in a continuously variable transmission for motor vehicles, more in particular according to claim 1, comprising an endless tensile means (31) and a multitude of plate-like transverse elements (33) that are provided on the tensile means (31) oriented predominantly transversely thereto and movable along its longitudinal direction, which elements (33) each show at least one recess (37) for accommodating the endless tensile means (31), a pulley contact face (35) located radially inward from the recess (37) on either lateral side of the element (33), a projection protruding from a front principle plane (38) of the element (33) and a hole (40) provided in a back principle plane (38) of the element (33), whereby the projection (39) of one element (33) engages the hole (40) of an adjacent element (33) such that a movement in either transverse or axial direction of the said one element (33) with respect to the adjacent element (33) is limited to a defined distance, i.e. an axial play $D_X$, **characterised in that** the axial play $D_X$ is equal to or smaller than the square of the element's dimension in the longitudinal direction, i.e. an element thickness Tact, divided by the element's dimension in the axial direction, i.e. an element width Wact.

3. Push belt (3) according to claim 2, **characterised in that** the axial play $D_X$ is larger than 0.005 times the element thickness Tact.

4. Push belt (3) according to claim 2 or 3, **characterised in that** when the transverse elements 33 are axially aligned their pulley contact faces (35) may arrive into contact with sheaves (4, 5) of a pulley (1, 2) of the transmission over a distance in the longitudinal direction, i.e. an effective element thickness Teff, whereby the axial play $D_X$ is smaller than:

$$\frac{Tact \cdot Teff}{Wact}$$

5. Push belt (3), in particular for application in a continuously variable transmission for motor vehicles, more in particular according to claim 1, comprising an endless tensile means (31) and a multitude of plate-like transverse elements (33) that are provided on the tensile means (31) oriented predominantly transversely thereto and movable along its longitudinal direction, which elements (33) each show at least one recess (37) for accommodating the endless tensile means (31), a pulley contact face (35) radially inward from the recess (37) located on either lateral side of the element (33), an arm part (47) located radially outward from the recess (37) on either lateral side of the element (33) and having a predominantly axially oriented end face (48) oriented substantially co-planar with a respective pulley contact face (35), **characterised in that** the elements are provided with locking means (50, 51) including a protruding part (50) protruding from a front principle plane (38) of the element (33) and a recessed part (51) provided in a back principle plane (38) of the element (33), whereby the protruding part (50) of one element (33) engages the recessed part (51) of an adjacent element (33), whereby by the interaction there between a movement in either transverse or axial direction of the said one element (33) with respect to the adjacent element (33) is limited to a defined distance, i.e. an axial play $D_X$.

6. Push belt (3) according to claim 5, **characterised in that** the protruding part (50) and the recessed part (51) are respectively provided with side planes (52, 53) that are substantially oriented in the radial and the longitudinal direction of the belt (3).

7. Push belt (3) according to claim 5 or 6, **characterised in that** the protruding part (50) is predominantly rectangular shaped and is located centrally on the front principle face (38) of the element (33).

8. Push belt (3) according to claim 5, 6 or 7, **characterised in that** the protruding part (50) at least extends to a radial level corresponding to that of a rocking edge (42) of the element (33) defining an axially oriented, sharp or slightly rounded edge between two sections of the front principle face (38) that are mutually oriented at a small but notional angle along which edge (42) adjacent elements (33) may mutually tilt.

9. Push belt (3) according to any one of the claims 5-8, **characterised in that** the protruding part (50) includes a backwards sloping front surface part 55 extending radially outwards, such that the protruding part (50) in the radial outward direction gradually becomes less protruding and finally merges with the front principle face (38) of the element (33)

10. Push belt (3) according to any one of the claims 5-9, **characterised in that** the axial play $D_X$ is smaller than the square of the element's dimension in the longitudinal direction, i.e. an element thickness Tact, divided by the element's dimension in the axial direction, i.e. an element width Wact.

**FIG. 1**

**FIG. 2**

**FIG. 3**

**FIG. 4**

**European Patent Office**

## EUROPEAN SEARCH REPORT

Application Number

EP 03 07 8220

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | EP 0 626 526 A (DOORNES TRANSMISSIE BV) 30 November 1994 (1994-11-30) | 1-4 | F16G5/16 |
| Y | * column 2, line 47 - column 5, line 6; figures 1-4 * | 5-10 | |
| X,D | EP 0 329 206 A (DOORNES TRANSMISSIE BV) 23 August 1989 (1989-08-23) | 1 | |
| Y | * column 2, line 38 - column 4, line 45; figures 1-5 * | 5-9 | |
| A | | 2-4,10 | |
| X | US 6 440 024 B1 (KOBAYASHI DAISUKE) 27 August 2002 (2002-08-27) | 1 | |
| Y | * column 3, line 3 - column 6, line 45; figures 1-12 * | 5-9 | |
| A | | 2-4,10 | |
| X | EP 0 781 939 A (HYUNDAI MOTOR CO LTD) 2 July 1997 (1997-07-02) | 1,5-9 | |
| A | * column 1, line 25 - line 53; figures 5,6A,6B * | 2-4,10 | TECHNICAL FIELDS SEARCHED (Int.Cl.7) |
| X | US 2001/053726 A1 (SATTLER HEIKO) 20 December 2001 (2001-12-20) | 1 | F16G |
| Y | * page 2, paragraph 19 - paragraph 25; figures 1-4 * | 5-10 | |
| A | | 2-4 | |

-----

The present search report has been drawn up for all claims

| Place of search | Date of completion of the search | Examiner |
|---|---|---|
| MUNICH | 15 March 2004 | Heinzler-Rödl, M |

EPO FORM 1503 03.82 (P04C01)

**ANNEX TO THE EUROPEAN SEARCH REPORT
ON EUROPEAN PATENT APPLICATION NO.**                 EP 03 07 8220

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2004

| Patent document cited in search report | | Publication date | Patent family member(s) | | Publication date |
|---|---|---|---|---|---|
| EP 0626526 | A | 30-11-1994 | NL | 9300880 A | 16-12-1994 |
| | | | DE | 69401532 D1 | 06-03-1997 |
| | | | DE | 69401532 T2 | 15-05-1997 |
| | | | EP | 0626526 A1 | 30-11-1994 |
| | | | JP | 7012177 A | 17-01-1995 |
| | | | US | 5439422 A | 08-08-1995 |
| EP 0329206 | A | 23-08-1989 | NL | 8800336 A | 01-09-1989 |
| | | | DE | 68902324 D1 | 10-09-1992 |
| | | | DE | 68902324 T2 | 10-12-1992 |
| | | | EP | 0329206 A1 | 23-08-1989 |
| | | | JP | 1242848 A | 27-09-1989 |
| | | | JP | 2700334 B2 | 21-01-1998 |
| | | | US | 4906225 A | 06-03-1990 |
| US 6440024 | B1 | 27-08-2002 | JP | 2001003993 A | 09-01-2001 |
| | | | US | 2002183152 A1 | 05-12-2002 |
| EP 0781939 | A | 02-07-1997 | AU | 722805 B2 | 10-08-2000 |
| | | | AU | 7646396 A | 03-07-1997 |
| | | | DE | 69611899 D1 | 05-04-2001 |
| | | | DE | 69611899 T2 | 20-09-2001 |
| | | | EP | 0781939 A1 | 02-07-1997 |
| | | | JP | 9329199 A | 22-12-1997 |
| | | | US | 5788594 A | 04-08-1998 |
| US 2001053726 | A1 | 20-12-2001 | DE | 10026877 A1 | 06-12-2001 |
| | | | BR | 0111370 A | 13-05-2003 |
| | | | WO | 0192757 A1 | 06-12-2001 |
| | | | JP | 2002039281 A | 06-02-2002 |

EPO FORM P0459